Europäisches Patentamt

European Patent Office

Office européen des brevets

(11) Numéro de publication: **0 030 493**
**A1**

## (12) DEMANDE DE BREVET EUROPEEN

(21) Numéro de dépôt: **80401690.5**

(22) Date de dépôt: **27.11.80**

(51) Int. Cl.³: **G 02 F 1/17**

(30) Priorité: **10.12.79 FR 7930196**

(43) Date de publication de la demande: **17.06.81**
**Bulletin 81/24**

(84) Etats contractants désignés: **AT CH DE GB IT LI NL SE**

(71) Demandeur: **COMMISSARIAT A L'ENERGIE ATOMIQUE**
**Etablissement de Caractère Scientifique Technique et**
**Industriel, B.P. 510, F-75752 Paris Cedex 15 (FR)**

(72) Inventeur: **Grange, Hubert, 23, Avenue Malherbe,**
**F-38100 Grenoble (FR)**

(74) Mandataire: **Mongredien, André et al, c/o**
**Brevatome 25, rue de Ponthieu, F-75008 Paris (FR)**

(54) Cellule d'affichage, notamment électrolytique, à barrière poreuse.

(57) La présente invention concerne une cellule d'affichage
électrolytique à barrière poreuse.

Cette cellule (2) comprend un film électrolytique (4)
intercalé entre deux parois (8 et 10) isolantes maintenues
écartées l'une de l'autre et pourvues chacune d'une électrode (12 et 14) placée en regard l'une de l'autre, et un mur
périphérique (16) d'étanchéité. Cette cellule comprend en
plus un logement (28) placé à proximité du mur (16) et isolé
du reste de la cellule (2) par une barrière poreuse (30) à
l'électrolyte. Cette barrière (30) peut être associée à deux
autres cales (32) de façon à servir de cale d'épaisseur. Le
logement (28) isolé du reste de la cellule à l'aide de la
barrière poreuse (30) permet d'emprisonner la bulle gazeuse pouvant intervenir lors du remplissage en électrolyte
de la cellule et lors du fonctionnement à haute température.

Application à l'affichage électrolytique.

La présente invention concerne une cellule d'affichage notamment électrolytique à barrière poreuse permettant l'affichage de caractères alphanumériques.

En général, une cellule à affichage électrolytique comprend un film électrolytique intercalé entre deux parois isolantes maintenues écartées l'une de l'autre et un mur périphérique d'étanchéité. La première paroi est revêtue d'une ou plusieurs électrodes et la seconde d'une contre-électrode, toutes deux reliées à des moyens d'alimentation électrique. L'affichage est obtenu en provoquant sur la ou l'une au moins des électrodes, par réaction électrochimique, le dépôt ou la dissolution d'une couche dont les propriétés optiques sont susceptibles de faire naître un signe (caractère, segment, etc...).

De telles cellules posent de nombreux problèmes de réalisation et notamment lors du remplissage de la cellule. En effet, il apparaît une bulle gazeuse au sein de l'électrolyte en cours du remplissage. Lors du fonctionnement, cette bulle gazeuse peut se déplacer et gêner le fonctionnement de la cellule, et notamment en ce qui concerne l'affichage. En revanche, cette bulle est nécessaire pour compenser les dilatations de l'électrolyte lors du fonctionnement à température élevée.

Ce problème existe également dans d'autres cellules d'affichage à milieu liquide, notamment les cellules d'affichage à cristaux liquides.

Dans ces dispositifs, actuellement, pour mettre cette bulle dans un endroit précis, on prévoit un logement dans l'une des parois disposé en un endroit où il n'interfère pas avec le tracé à afficher. Cette bulle, non isolée du reste de la cellule, peut malgré tout, lors du fonctionnement de celle-ci, se déplacer au sein du milieu liquide. Il existe d'autres moyens pour mettre

B 6837.3 CL

cette bulle dans un endroit précis et notamment dans le queusot obturant le trou de remplissage de la cellule. Comme précédemment, la bulle peut s'échapper de ce logement et venir gêner l'affichage.

Pour avoir de plus amples détails sur les logements cités, on peut se référer au brevet français n° 2 220 839 déposé. le 11 février 1974 et intitulé "Dispositif d'affichage à cristal liquide".

Ce problème existe également dans des cellules électrochromes à électrolyte liquide. Une solution de ce problème pour de telles cellules est décrite dans le brevet allemand n° 2 802 728 intitulé "Elektrochrome Anzeigezelle".

Dans ce brevet, il est décrit une cellule électrochrome à électrolyte liquide comprenant une couche poreuse inhibée d'électrolyte, placée entre les couches électrochromes recouvrant les électrodes, permettant d'isoler la bulle gazeuse.

La solution proposée dans ce brevet est liée au type d'affichage. Cette solution n'est pas transposable à une cellule électrolytique et de façon plus générale à une cellule où apparaît et disparaît une couche d'affichage sur l'une des électrodes. En effet, pour de telles cellules, il est indispensable de maintenir, devant les électrodes d'affichage un volume de liquide suffisant pour que la couche d'affichage puisse croître librement.

L'invention a pour but de remédier à ces inconvénients et notamment d'emprisonner la bulle gazeuse dans un endroit tel que celle-ci ne puisse pas perturber l'affichage.

L'invention a pour objet une cellule d'affichage du genre de celles qui ont été décrites précédemment. Cette cellule comprend de plus, un logement non situé en regard des électrodes et isolé du reste de la cellule par une barrière poreuse au milieu liquide. Cette barrière qui peut servir de cale d'épaisseur peut être associée à au moins une autre cale.

Selon un mode de réalisation préféré de l'invention, le logement est placé à proximité du mur d'étanchéité.

Selon un autre mode de réalisation préféré de l'invention, l'une des électrodes, en général la contre-électrode, est recouverte d'un écran poreux constitué par une poudre de granulométrie contrôlée mélangée à un liant inorganique. Il en est de même pour la barrière poreuse permettant d'isoler la bulle gazeuse du restant de la cellule. La poudre et le liant constituant la barrière poreuse peuvent être identiques ou non à ceux qui constituent l'écran poreux. La poudre utilisée peut être un oxyde métallique, en particulier d'aluminium ou de titane, tandis que le liant inorganique peut être de la silice hydratée.

Il est à noter que, contrairement à la solution proposée dans le brevet allemand n° 2 802 728, précédemment cité, la solution apportée par l'invention pour l'emprisonnement de la bulle gazeuse est applicable à tout genre de cellules comprenant un milieu liquide comme par exemple à des cellules électrolytiques et des cellules électrochromes à électrolyte liquide.

D'autres caractéristiques et avantages de l'invention ressortiront mieux de la description qui va suivre, donnée à titre purement illustratif et non limitatif, en référence aux figures annexées, dans lesquelles :

- la figure 1 représente schématiquement une vue générale en perspective de la cellule selon l'invention ;

- la figure 2 représente schématiquement une coupe selon la ligne I-I de la figure 1,

B 6837.3 CI

4                    0030493

- la figure 3 représente schématiquement une coupe selon la ligne II-II de la figure 1,

- la figure 4 représente schématiquement une coupe selon la ligne III-III de la figure 1.

La cellule à affichage électrolytique 2 représentée sur les quatre figures comporte un électrolyte 4 que l'on a introduit à l'aide du tube effilé 6 entre deux parois isolantes 8 et 10. La paroi 10 est recouverte d'une première couche de métal 11, puis d'une deuxième couche 14. Une couche métallique 12 déposée sur la paroi 8 constitue une électrode possédant une structure appropriée à l'affichage 13 (matrice de points, segments, etc...) les zones utiles étant en contact avec l'électrolyte 4, les zones non utiles étant recouvertes d'une couche isolante 18. La couche 14 disposée sur la paroi 10 constitue une contre-électrode. La cellule 2 comprend aussi un mur périphérique 16 permettant de fermer de façon étanche la cellule 2. La couche isolante 18 est disposée entre le mur 16 et la couche conductrice 12, si ce mur est conducteur. Les électrodes 12 et 14 sont reliées à une source de tension 20, par l'intermédiaire d'un commutateur 22 permettant d'appliquer entre les électrodes 12 et 14 une différence de potentiel continue dans un sens ou dans l'autre.

Des réactions électrochimiques d'oxydoréduction entraînent le dépôt ou la dissolution sur l'électrode 12 (selon sa polarité) d'une couche 24 qui peut être par exemple une couche métallique absorbante ou réfléchissante.

La contre-électrode 14 peut être ou non recouverte d'un écran poreux 26 masquant totalement celle-ci de façon homogène. Cet écran poreux 26 améliore le contraste de l'affichage.

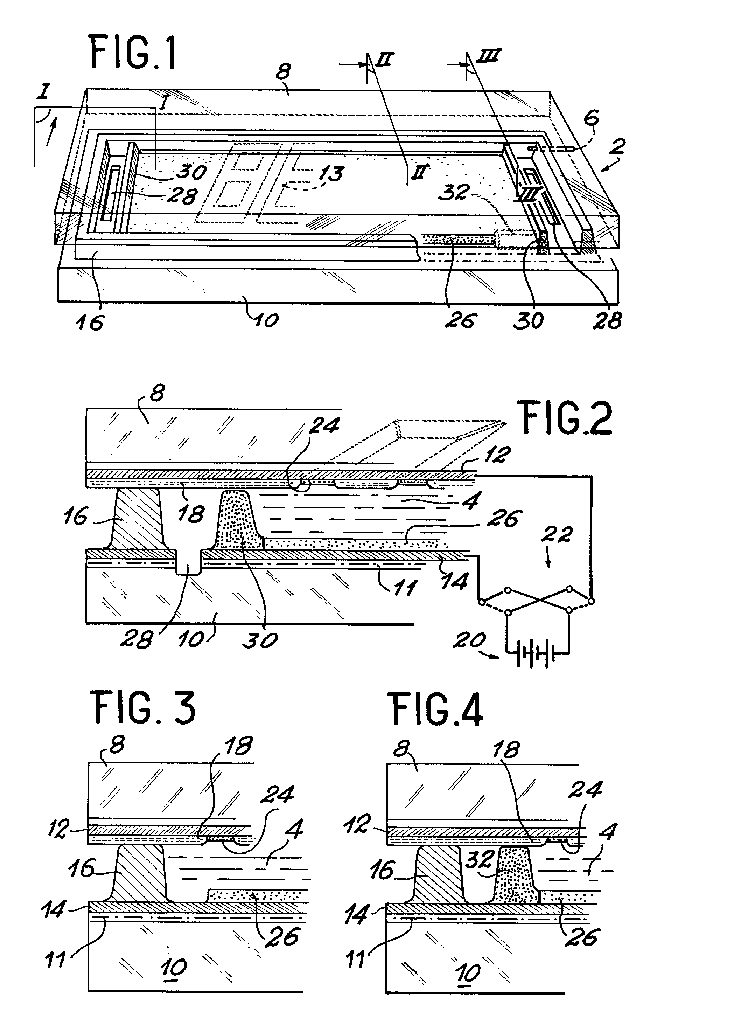

Selon l'invention, cette cellule comprend en outre, un ou deux logements 28, schématisés sur la figure 2, isolé chacun du reste de la cellule par une barrière poreuse 30.

Lorsque la cellule ne comprend qu'un seul logement 28, situé par exemple à l'extrémité de la cellule opposée à l'extrémité munie du tube effilé 6, la barrière poreuse 30 associée audit logement peut être associée à deux autres cales 32, schématisées sur les figures 1 et 4, la barrière poreuse servant aussi de cale d'épaisseur.

En revanche, lorsque la cellule comprend deux logements 28, ceux-ci pouvant être situés à chaque extrémité de la cellule, l'un des deux logements étant alors contigu au tube effilé 6 permettant le remplissage de la cellule, les barrières poreuses 30 associées à chacun des logements servent de cales d'épaisseur, et il n'est nullement besoin de prévoir, dans ce cas, de cales 32.

Ces dispositions facilitent le remplissage de la cellule en électrolyte. En effet, lors du remplissage de celle-ci, ces logements 28 peuvent être partiellement remplis d'électrolyte.

A basse température, l'électrolyte se contracte et traverse les barrières poreuses 30, tandis que la bulle gazeuse reste emprisonnée dans les logements 28. La dimension de ces logements est fonction de la dimension de la bulle gazeuse qui atteint sa plus grande dimension à la température de fonctionnement la plus basse. Au contraire, à haute température, l'électrolyte se dilate et traverse les barrières poreuses jusqu'à occuper une partie des logements 28, situés par exemple entre les barrières poreuses et le mur d'étanchéité.

On a représenté sur les figures 1 et 2, un logement dont la section est rectangulaire, mais ceci n'est pas limitatif. En effet, ce logement peut présenter une section arrondie, que l'on peut, par exemple, obtenir par meulage de la paroi 10.

B 6837.3 CL

0030493

Les barrières poreuses sont constituées d'une poudre de granulométrie contrôlée qui peut être un oxyde métallique de titane ou d'aluminium, mélangée à un liant inorganique qui peut être de la silice hydratée. En particulier, ces barrières poreuses peuvent être constituées de la même façon que l'écran poreux. Un exemple de la composition de cette barrière poreuse peut être donné comme illustration.

La poudre est une poudre d'oxyde de titane ($TiO_2$), le liant de la silice hydratée.

Les proportions des constituants peuvent être (en volume avant séchage) : $TiO_2$ 70 %, silice hydratée 30 %.

En ce qui concerne la composition et l'utilisation de l'écran poreux, on peut se référer au brevet français n° 2 393 386 déposé le 1er juin 1977 et intitulé "Cellule d'affichage électrolytique à écran poreux".

A titre explicatif, un exemple de fabrication d'une cellule comme décrite précédemment peut être donné.

On réalise en premier lieu une face arrière classique constituée d'une paroi en verre recouverte d'une couche de platine, puis d'une couche d'argent formant la contre-électrode, et enfin d'une dernière couche constituant l'écran poreux. Sur ce dernier est placé un masque de sérigraphie de 50 $\mu$ d'épaisseur. Ensuite, on insole les zones correspondant aux emplacements de la ou des barrières poreuses et des deux cales. Après deux passes de pâte poreuse qui constitueront la ou les barrières et les deux cales, suivies chacune d'un certain temps de séchage, on fait cuire le tout pendant quinze minutes à 300°C.

Le montage de la cellule est ensuite effectué selon le processus habituel, ainsi que le remplissage

B 6837.3 CL

de la cellule.

Pour connaître de façon plus explicite le montage d'une telle cellule, ainsi que son remplissage, on peut se référer au brevet français n° 2 393 387 déposé le 1er juin 1977 et intitulé "Cellule à affichage à film liquide, son procédé de remplissage et son procédé de fabrication".

L'invention a été décrite dans le cas de l'application à une cellule d'affichage électrolytique ; mais elle est évidemment utilisable dans toute cellule d'affichage à remplissage liquide, notamment dans une cellule à cristaux liquides ou dans une cellule électrochrome à électrolyte liquide, ainsi que dans tout obturateur de lumière à milieu liquide, notamment à dépôt électrolytique ou à cristaux liquides.

B 6837.3 CL

8

0030493

REVENDICATIONS

1. Cellule d'affichage (2) du genre de celles qui comprennent un milieu liquide (4) intercalé entre deux parois isolantes (8 et 10) maintenues écartées l'une de l'autre et pourvues chacune d'au moins une électrode (12 et 14) placées en regard l'une de l'autre et un mur périphérique d'étanchéité (16), caractérisée en ce qu'elle comprend au moins un logement (28) non situé en regard des électrodes et isolé du reste de la cellule (2) par une barrière poreuse (30) au milieu liquide (4).

2. Cellule d'affichage selon la revendication 1, caractérisée en ce que le logement (28) est placé à proximité du mur d'étanchéité (16).

3. Cellule d'affichage selon l'une quelconque des revendications 1 et 2, caractérisée en ce que la barrière poreuse (30), associée à au moins une autre cale (32), sert de cale d'épaisseur.

4. Cellule d'affichage selon l'une quelconque des revendications 1 à 3, caractérisée en ce que l'une des électrodes est recouverte d'un écran poreux (26) constitué par une poudre de granulométrie contrôlée, mélangée à un liant inorganique.

5. Cellule d'affichage selon l'une quelconque des revendications 1 à 4, caractérisée en ce que la barrière poreuse (30) est constituée par une poudre de granulométrie contrôlée, mélangée à un liant inorganique.

6. Cellule d'affichage selon les revendications 4 et 5, caractérisée en ce que la barrière poreuse (30) est constituée de la même poudre et du même liant que ceux qui constituent l'écran poreux.

7. Cellule d'affichage selon la revendication 5, caractérisée en ce que la poudre est un oxyde métallique, notamment de titane ou d'aluminium.

B 6837.3 CL

0030493

8. Cellule d'affichage selon la revendication 5, caractérisée en ce que le liant est de la silice hydratée.

9. Cellule d'affichage selon l'une quelconque des revendications 1 à 8, caractérisée en ce que le milieu liquide est un électrolyte.

10. Cellule d'affichage selon la revendication 9, dans laquelle l'électrolyte est un sel métallique, caractérisée en ce que l'une des électrodes (14) est munie d'une couche constituée du métal correspondant audit sel.

B 6837.3 CL

FIG.1

FIG.2

FIG. 3

FIG.4

Office européen
des brevets

**RAPPORT DE RECHERCHE EUROPEENNE**

003049

Numéro de la demande

EP 80 40 1690

| Catégorie | Citation du document avec indication, en cas de besoin, des parties pertinentes | Revendication concernée |
|---|---|---|
| | IEEE TRANSACTIONS ON ELECTRON DEVICES, vol. ED-26, no. 8, août 1979 NEW YORK (US) J. DUCHENE et al.:"Electrolytic Display" pages 1243-1245 <br><br> * page 1243 - page 1244, paragraphe intitulé "Device Description" * <br><br> -- | 1,4,9, 10 |
| A | DE - A - 2 916 382 (TOKYO SHI-BAURA DENKI K.K.) <br><br> * figure 2 * <br><br> -- | 1 |
| D/A | DE - A - 2 802 728 (SHARP K.K.) <br><br> * revendications 1,2,6,7,10,11, 13; page 5, lignes 7-14; page 14, lignes 11-27; page 16, lignes 7-12; figures 9-13 * <br><br> -- | 1,4,9 |
| D/A | FR - A - 2 393 386 (C.E.A.) <br><br> * en entier * <br><br> -- | 4,5,7-9 |
| D/A | FR - A - 2 220 839 (HITACHI LTD.) <br><br> * figures 3,4 * <br><br> ----- | 1,2,9 |

**DOCUMENTS CONSIDERES COMME PERTINENTS**

CLASSEMENT DE LA DEMANDE (Int. Cl.³)

G 02 F 1/17

DOMAINES TECHNIQUES RECHERCHES (Int. Cl.³)

G 02 F 1/17
1/01

CATEGORIE DES DOCUMENTS CITES

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 10-03-1981 | FARNESE |

OEB Form 1503.1 06.78